(19) Europäisches Patentamt
European Patent Office
Office européen des brevets

(11) **EP 3 017 536 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
*H02P 6/18* [(2016.01)]    *H02P 21/14* [(2016.01)]

(21) Anmeldenummer: **14729937.4**

(86) Internationale Anmeldenummer:
**PCT/EP2014/062562**

(22) Anmeldetag: **16.06.2014**

(87) Internationale Veröffentlichungsnummer:
**WO 2015/000682 (08.01.2015 Gazette 2015/01)**

(54) **VERFAHREN UND VORRICHTUNG ZUR SENSORLOSEN ERMITTLUNG EINER LÄUFERLAGE EINER ELEKTRISCHEN MASCHINE**

METHOD AND DEVICE FOR THE SENSORLESS DETERMINATION OF A ROTOR POSITION OF AN ELECTRIC MOTOR

PROCÉDÉ ET DISPOSITIF DE DÉTERMINATION, SANS L'AIDE DE CAPTEUR, D'UNE POSITION D'UN ROTOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2013 DE 102013212876**

(43) Veröffentlichungstag der Anmeldung:
**11.05.2016 Patentblatt 2016/19**

(73) Patentinhaber: **Robert Bosch GmbH**
**70442 Stuttgart (DE)**

(72) Erfinder: **FRICKER, David**
**F-67240 Oberhoffen Sur Moder (FR)**

(56) Entgegenhaltungen:
**DE-A1-102006 042 702    DE-A1-102010 038 295**
**DE-A1-102010 041 021    DE-T2- 60 024 222**

- **TURSINI M ET AL: "Speed and position estimation for PM synchronous motor with back-EMF observer", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., Bd. 3, 2. Oktober 2005 (2005-10-02), Seiten 2083-2090, XP010842683, DOI: 10.1109/IAS.2005.1518735 ISBN: 978-0-7803-9208-3**

**Beschreibung**

Technisches Gebiet

Die vorliegende Erfindung betrifft elektronisch kommutierte elektrische Maschinen, bei denen eine Läuferlage eines Läufers sensorlos mithilfe einer Bestimmung einer induzierten Spannung erfasst wird. Insbesondere betrifft die vorliegende Erfindung ein Verfahren zur sensorlosen Bestimmung der Läuferlage.

Stand der Technik

Zur elektronischen Kommutierung von elektrischen Maschinen ist es notwendig, die Läuferlage des Läufers (bei rotatorischen Maschinen die Rotorlage des Rotors) zu bestimmen, um daraus die momentane Richtung und Stärke des anzulegenden Drehfelds bzw. des Feldzeigers zu ermitteln. Neben zahlreichen Verfahren zur sensorbasierten Erfassung der Läuferlage sind zunehmend Verfahren im Einsatz, bei denen die Läuferlage basierend auf bekannten elektrischen Größen, wie beispielsweise Phasenspannungen und Phasenströmen, bestimmt wird.

Eines dieser Verfahren wird Back-EMF-Verfahren genannt, mit dem die Läuferlage aus der induzierten Spannung in einer der Phasen der elektrischen Maschine ermittelt wird. Dabei wird eine bestimmte Läuferlage einer Position des Nulldurchgangs der induzierten Spannung zugeordnet. Da es zur Messung der induzierten Spannung notwendig ist, den entsprechenden Phasenanschluss, an dem die induzierte Spannung gemessen werden soll, stromlos zu schalten, bestehen bei der Verwendung des Back-EMF-Verfahrens Einschränkungen hinsichtlich der Wahl des geeigneten Bestromungsmusters für die elektronische Kommutierung. Weiterhin ist eine Läuferlagebestimmung mithilfe des Back-EMF-Verfahrens in der Regel nur bei solchen elektrischen Maschinen exakt möglich, bei denen die induzierte Spannung einen annähernd sinusförmigen Verlauf beschreibt und die Phasenspannungen, je nach Art des Wechselrichters, nicht über einen Wechselrichter gestellt werden, da bei Wechselrichtern ein Phasenanschluss nicht stromlos geschaltet werden kann.

Zur Messung der induzierten Spannung sind in der Regel Austastlücken in Form von Unterbrechungen des Bestromungsmusters gemäß einer vorgegebenen Pulsweitenmodulation vorgesehen. Während der Austastlücken wird eine betreffende Phase, in der ein Nulldurchgang der induzierten Spannung erwartet wird, stromlos geschaltet und eine Messung der Höhe bzw. des Gradienten der induzierten Spannung durchgeführt, um den Zeitpunkt des Nulldurchgangs der induzierten Spannung während der Austastlücke zu bestimmen.

Das Vorsehen von Austastlücken ist jedoch mit einer erhöhten Geräuschentwicklung im Betrieb der elektrischen Maschine verbunden. Eine für beispielsweise das Geräuschverhalten vorteilhafte dauerhafte Spannungsvorgabe (ohne Austastlücke) ist mit einem Back-EMF-Verfahren in der Regel nicht möglich. Die Güte bekannter Verfahren zum sensorlosen Betrieb von sinusförmigen Maschinen, wie beispielsweise einer sensorlosen feldorientierten Regelung, nimmt ab, je weiter der Verlauf der induzierten Spannung von einem rein sinusförmigen Verlauf abweicht.

Man kann weiterhin ein Verfahren zum Ermitteln einer Läuferlage einer rotatorischen, mehrphasigen, elektronisch kommutierten elektrischen Maschine vorsehen, die mehrere Phasenwicklungen aufweist, die über Phasenanschlüsse bestrombar sind. Dabei werden Phasenspannungen und Phasenströme an Phasenanschlüssen der elektrischen Maschine bestimmt und die induzierten Spannungen an den Phasenanschlüssen der elektrischen Maschine aus den bestimmten Phasenspannungen und Phasenströmen ermittelt. Die durch die induzierten Spannungen bestimmten Spannungszeiger der induzierten Spannung werden bezüglich eines statorfesten kartesischen Koordinatensystems bereitgestellt und die Läuferlage wird als ein Raumzeigerwinkel des bezüglich des statorfesten kartesischen Koordinatensystems bereitgestellten Spannungszeigers der induzierten Spannung ermittelt. Relevanter Stand der Technik ist aus DE 10 2010 038295 A1 und DE 10 2006 042702 A1 bekannt. Es ist daher Aufgabe der vorliegenden Erfindung, ein Verfahren und eine Vorrichtung zur Verfügung zu stellen, mit denen die sensorlose Ermittlung der Läuferlage auch bei nicht sinusförmigen Spannungen in einfacher Weise möglich ist.

Offenbarung der Erfindung

Diese Aufgabe wird durch das Verfahren zur sensorlosen Ermittlung einer Läuferlage gemäß Anspruch 1 sowie durch die Vorrichtung, das Motorsystem und das Computerprogrammprodukt gemäß den nebengeordneten Ansprüchen gelöst

Weitere vorteilhafte Ausgestaltungen der vorliegenden Erfindung sind in den abhängigen Ansprüchen angegeben.

Gemäß einem ersten Aspekt ist ein Verfahren zum sensorlosen Ermitteln einer Läuferlage einer rotatorischen, mehrphasigen, elektronisch kommutierten elektrischen Maschine vorgesehen, wobei die elektrische Maschine mehrere Phasenwicklungen aufweist, die über Phasenanschlüsse bestrombar sind, umfassend die folgenden Schritte:

- Bestimmen von Phasenspannungen und Phasenströmen an Phasenanschlüssen der elektrischen Maschine;
- Ermitteln der induzierten Spannungen an den Phasenanschlüssen der elektrischen Maschine aus den bestimmten Phasenspannungen und Phasenströmen; und
- Bereitstellen des durch die induzierten Spannungen bestimmten Spannungszeigers der induzierten Spannung bezüglich eines statorfesten kartesischen Koordinatensystems;

wobei der Raumzeigerwinkel des bezüglich des statorfesten kartesischen Koordinatensystems bereitgestellten Spannungszeigers der induzierten Spannung rechnerisch um einen geschätzten Wert der Läuferlage rotiert wird;
wobei der rotierte Spannungszeiger tiefpassgefiltert wird; und
wobei basierend auf einer Winkellage des tiefpassgefilterten rotierten Spannungszeigers der induzierten Spannung der geschätzte Wert der Läuferlage für den darauffolgenden Berechnungszyklus bestimmt wird.

Eine Idee des obigen Verfahrens besteht darin, die Läuferlageschätzfehler indirekt über die Schätzfehler der induzierten Spannungen zu erfassen. Dabei können deren Verläufe auch nicht sinusförmig sein, wie sie insbesondere bei Motoren geringer Baugröße vorkommen.

Die Ermittlung der geschätzten Läuferlage erfolgt durch eine Rotation des Raumzeigers für die induzierte Spannung, der durch die geschätzte Läuferlage so rotiert wird, dass der rotierte Raumzeiger für die Grundschwingung der induzierten Spannung im Idealfall auf eine vorgegebene Position, z. B. eine Nulllage, rotiert wird. Da im Betriebsfall keine idealen Bedingungen vorliegen und sich insbesondere keine sinusförmigen Verläufe der induzierten Spannung ergeben, wird der rotierte Spannungszeiger einen durch die Oberwellen der induzierten Spannung verursachten Frequenzanteil aufweisen (durch die Drehung um die Grundschwingung verschoben). Diese werden durch eine Tiefpassfilterung von Nutzsignal, das sich im Gleichanteil (zurückgedrehte Grundschwingung) befindet, herausgefiltert. Der somit erhaltene Raumzeiger wird nahe der vorgegebenen Position variieren. Durch das rechnerische Rotieren des Raumzeigerwinkels und die nachfolgende Tiefpassfilterung des rotierten Spannungszeigers der induzierten Spannung wird eine Bandpassfilterung im statorfesten Bereich realisiert. Der so entstehende Schätzfehler wird ausgewertet, indem eine Winkellage des sich ergebenden tiefpassgefilterten rotierten Spannungszeigers der induzieren Spannung ermittelt und als Schätzfehler der Abweichungswinkel berechnet wird. Diese Ermittlung kann entweder genau mithilfe einer Arcustangensfunktion oder näherungsweise durch Näherungsfunktionen bestimmt werden. Anschließend wird basierend auf dem Schätzfehler ein Wert für die geschätzte Läuferlage für den folgenden Berechnungszyklus bestimmt. Auf diese Weise ist es möglich, eine Läuferlage und eine entsprechende Drehzahlangabe auch bei elektrischen Maschinen, die einen nicht sinusförmigen Verlauf der induzierten Spannung hervorrufen, sensorlos zu erhalten.

Weiterhin kann das Bereitstellen des durch die induzierten Spannungen bestimmten Spannungszeigers der induzierten Spannung bezüglich des statorfesten kartesischen Koordinatensystems durchgeführt werden, indem die ermittelten induzierten Spannungen in das statorfeste kartesische Koordinatensystem umgewandelt werden oder indem die bestimmten Phasenspannungen und Phasenströme an den Phasenanschlüssen der elektrischen Maschine in das statorfeste kartesische Koordinatensystem umgewandelt werden, bevor aus diesen die induzierten Spannungen ermittelt werden.

Es kann vorgesehen sein, dass eine Filterfrequenz und/oder die Bandbreite der Tiefpassfilterung abhängig von der Drehzahl gewählt werden.

Weiterhin kann basierend auf der Winkellage des tiefpassgefilterten rotierten Spannungszeigers der induzierten Spannung ein Schätzfehler ermittelt werden, wobei basierend auf dem Schätzfehler die Änderung der geschätzten Läuferlage zwischen zwei aufeinanderfolgenden Berechnungszyklen bestimmt wird.

Gemäß einer Ausführungsform wird der Schätzfehler abhängig von einem Imaginär- und einem Realteil des tiefpassgefilterten rotierten Spannungszeigers der induzierten Spannung oder abhängig von einem Imaginär- oder Realteil des tiefpassgefilterten rotierten Spannungszeigers der induzierten Spannung und einer Angabe über die Drehzahl ermittelt.

Gemäß einem weiteren Aspekt ist eine Vorrichtung zum Ermitteln einer Läuferlage einer rotatorischen, mehrphasigen, elektronisch kommutierten elektrischen Maschine vorgesehen, wobei die elektrische Maschine mehrere Phasenwicklungen aufweist, die über Phasenanschlüsse bestrombar sind, umfassend:

- eine Einrichtung zum Bestimmen von Phasenspannungen und Phasenströmen an Phasenanschlüssen der elektrischen Maschine; und
- eine Steuereinheit, die ausgebildet ist, um

    • die induzierten Spannungen an den Phasenanschlüssen der elektrischen Maschine zu ermitteln;
    • den durch die induzierten Spannungen bestimmten Spannungszeiger der induzierten Spannung bezüglich eines statorfesten kartesischen Koordinatensystems bereitzustellen; und
    • den Raumzeigerwinkel des bezüglich des statorfesten kartesischen Koordinatensystems bereitgestellten Spannungszeigers der induzierten Spannung rechnerisch um einen geschätzten Wert der Läuferlage zu rotieren;

- den rotierten Spannungszeiger tiefpasszufiltern; und• basierend auf einer Winkellage des tiefpassgefilterten rotierten Spannungszeigers der induzierten Spannung der geschätzte Wert der Läuferlage für den darauffolgenden Berechnungszyklus zu bestimmen.

Gemäß einem weiteren Aspekt ist ein Motorsystem mit einer rotatorischen, mehrphasigen, elektronisch kommutierten elektrischen Maschine und mit der obigen Vorrichtung vorgesehen.

Gemäß einem weiteren Aspekt ist ein Computerprogrammprodukt vorgesehen, das einen Programmcode enthält, der, wenn er auf einer Datenverarbeitungseinheit ausgeführt wird, in dem obigen Verfahren, die folgenden Schritte durchführt:

- Empfangen von Angaben zu den Phasenspannungen und Phasenströmen an Phasenanschlüssen der elektrischen Maschine;
- Ermitteln der induzierten Spannungen an den Phasenanschlüssen der elektrischen Maschine aus den empfangenen Phasenspannungen und Phasenströmen;
- Bereitstellen eines durch die induzierten Spannungen bestimmten Spannungszeigers der induzierten Spannung bezüglich eines statorfesten kartesischen Koordinatensystems;
- rechnerisches Rotieren des Raumzeigerwinkels des bezüglich des statorfesten kartesischen Koordinatensystems bereitgestellten Spannungszeigers der induzierten Spannung um einen geschätzten Wert der Läuferlage;
- Tiefpassfiltern des rotierten Spannungszeigers; und
- basierend auf einer Winkellage des tiefpassgefilterten rotierten Spannungszeigers der induzierten Spannung, Bestimmen des geschätzten Werts der Läuferlage für den darauffolgenden Berechnungszyklus.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1    eine Blockdarstellung eines Motorsystems mit einer elektronisch kommutierten elektrischen Maschine zum sensorlosen Betrieb; und

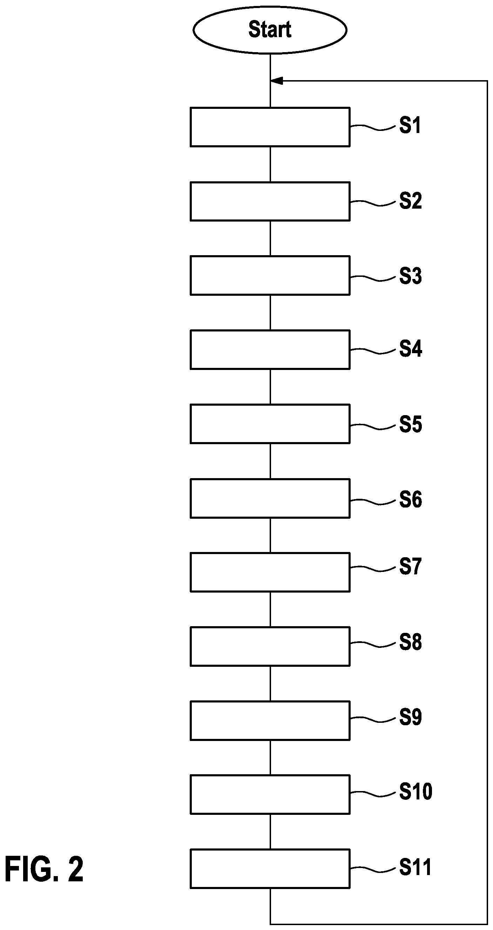

Figur 2    eine Funktionsblockdarstellung zur Bestimmung der tatsächlichen Läuferlage aus der induzierten Spannung.

Beschreibung von Ausführungsformen

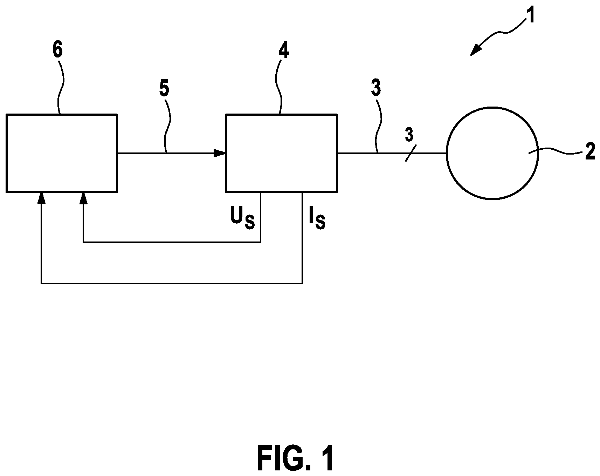

Figur 1 zeigt ein Motorsystem 1 zum Betreiben einer elektrischen Maschine 2. Die elektrische Maschine 2 ist vorzugsweise als bürstenlose, d. h. elektronisch kommutierte, elektrische Maschine, wie beispielsweise in Form einer Synchronmaschine, einer Asynchronmaschine, einer Reluktanzmaschine oder dergleichen, ausgeführt. Die elektrische Maschine 2 ist mehrphasig ausgebildet und es werden über drei Phasenleitungen 3 drei Phasenspannungen an die elektrische Maschine 2 angelegt, um diese zu betreiben. Grundsätzlich sind auch elektrische Maschinen mit anderen Phasenzahlen denkbar, mit denen das nachstehende Verfahren durchgeführt werden kann.

Die Phasenspannungen werden in einer Treiberschaltung 4 erzeugt. Wird die elektrische Maschine 2 als ein Generator betrieben, so werden über die Phasenleitungen 3 elektrische Spannungen und Ströme von der Treiberschaltung 4, die in diesem Fall als Wandlerschaltung betrieben wird, empfangen.

Im Folgenden wird von einem Antriebsmotor als elektrische Maschine 2 ausgegangen.

Die Treiberschaltung 4 legt zum Betreiben der elektrischen Maschine 2 zeitlich aufeinander folgend Phasenpotentiale (Phasenspannungen) an die Phasenleitungen 3 an, und zwar abhängig von Steuersignalen, die der Treiberschaltung 4 über Steuerleitungen 5 bereitgestellt werden. Dazu ist eine Versorgungsquelle (nicht gezeigt) mit der Treiberschaltung 4 verbunden, die die elektrische Energie zum Betreiben des Antriebsmotors 2 in Form einer Versorgungsspannung bereitstellt.

Die Steuersignale werden in einer Steuereinheit 6 abhängig von einer Läuferlage eines Läufers der elektrischen Maschine 2 und optional abhängig von einer Läufergeschwindigkeit bzw. Drehzahl des Läufers generiert. Die Steuereinheit 6 kann beispielsweise als Mikrocontroller ausgebildet sein.

Im vorliegenden Fall soll das Motorsystem 1 sensorlos ausgebildet sein und es werden die Läuferlage bzw. die Drehzahl aus Phasenspannungen und Phasenströmen abgeleitet. Ein gängiges Verfahren hierfür ist die Bestimmung der induzierten Spannung mithilfe des so genannten Back-EMF-Verfahrens. Beim Back-EMF-Verfahren wird der Verlauf der induzierten Spannung $U_{ind}$ in den Phasensträngen des Antriebsmotors 2, d. h. in den Phasenleitungen 3, ermittelt und die Zeitpunkte der Nulldurchgänge der induzierten Spannung $U_{ind}$ werden einer festen Läuferposition zugeordnet.

Im Folgenden wird von einem dreiphasigen Antriebsmotor 2 ausgegangen. In einem Schritt S1 werden zunächst

die Phasenströme $I_a$, $I_b$, $I_c$ gemessen. Weiterhin werden in Schritt S2 Phasenspannungen $U_a$, $U_b$, $U_c$ ermittelt, und z. B. basierend auf der angelegten Versorgungsspannung $U_{dc}$ und dem bereitgestellten Kommutierungsmuster der Steuereinheit 6 abgeleitet.

In Schritt S3 werden zunächst die Phasenspannungen $U_a$, $U_b$, $U_c$ in ein zweiphasiges Alpha-Beta-Raumzeigersystem umgewandelt. Man erhält:

$$U_\alpha = U_a - 0{,}5U_b - 0{,}5U_c$$

$$I_\alpha = 1{,}5I_a$$

$$U_\beta = \sqrt{3}/2 \times \left(U_b - U_c\right)$$

$$I_\beta = \sqrt{3} \times \left(0{,}5I_a + I_b\right).$$

In Schritt S4 werden die Stromableitungen für die beiden Komponenten der in das statorfeste kartesische Koordinatensystem umgewandelten Motorströme $I_\alpha$ und $I_\beta$ wie folgt numerisch ermittelt:

$$\left(\frac{dI_\alpha}{dt}\right)_{k-n} = \sum a_j I_{\alpha\,k-j}$$

$$\left(\frac{dI_\beta}{dt}\right)_{k-n} = \sum a_j I_{\beta\,k-j}$$

Die Umwandlung in das statorfeste kartesische Koordinatensystem hat den Vorteil, dass die Komponenten der Spannungen und Ströme voneinander linear unabhängig sind und somit keine Kopplungen aufweisen.

Da die Ableitung nicht als Momentanwert sondern lediglich für die Vergangenheit (bzw. den vorangehenden Rechenzyklus) berechnet werden kann, müssen die zuvor ermittelten Ströme und Spannungen nachfolgend in Schritt S5 ebenfalls verzögert werden:

$$I_{k-n} = z^{-n} \cdot I_k$$

$$U_{k-n} = z^{-n} \cdot U_k.$$

Dadurch können die Ströme und Spannungen für den gleichen Zeitstempel generiert werden wie die entsprechenden Ableitungen.

Nun kann in Schritt S6 die induzierte Spannung $Uind_{k-n}$ sowohl für die d-Komponente $Uind_{d^*k-n}$ als auch die q-Komponente $Uind_{q^*k-n}$ wie folgt berechnet werden:

$$Uind_{k-n} = U_{k-n} - R \cdot I_{k-n} - L \cdot \left(\frac{dI}{dt}\right)_{k-n}.$$

Im nächsten Schritt S7 wird der Raumzeiger der ermittelten induzierten Spannung um einen geschätzten Wert der Läuferlage $\theta^*_{k-n}$ rechnerisch gedreht bzw. rotiert, um den Raumzeiger der induzierten Spannung fest an einer Position zu halten. Die Drehung bzw. Rotation wird wie folgt durchgeführt:

$$\begin{bmatrix} Uind_{d^*k-n} \\ Uind_{q^*k-n} \end{bmatrix} = \begin{bmatrix} \cos(\theta^*_{k-n}) & \sin(\theta^*_{k-n}) \\ -\sin(\theta^*_{k-n}) & \cos(\theta^*_{k-n}) \end{bmatrix} \cdot \begin{bmatrix} Uind_{\alpha\,k-n} \\ Uind_{\beta\,k-n} \end{bmatrix},$$

5

wobei $\theta^*_{k-n}$ der prädizierten Rotorlage entspricht.

In Schritt S8 wird nun die so ermittelte modifizierte induzierte Spannung $Uind_{dq^*}$ tiefpassgefiltert, um $Uind_{TPbq^*}$ zu erhalten. Die Tiefpassfilterung bewirkt, dass die Oberwellenanteile aus dem Raumzeigersignal der induzierten Spannung $Uind_{dq^*}$ gefiltert werden. Man erhält $Uind_{TPd} = 0$ und $Uind_{TPq} = K\omega$. Der tiefpassgefilterte Raumzeiger der induzierten Spannung $Uind_{TPdq^*}$ ermöglicht nun die Ermittlung eines Schätzfehlers $\varepsilon$ über den Imaginär- und Realteil der induzierten Spannung $Uind_{TPdq^*}$. Der Schätzfehler $\varepsilon$ kann in Schritt S9 als ein durch den d- und q-Anteil der induzierten Spannung $Uind_{TPd^*k-n}$, $Uind_{TPq^*k-n}$ gebildeter Raumzeigerwinkel ermittelt werden.

$$\varepsilon = atan2(Uind_{TP\,d^*\,k-n}, Uind_{TP\,q^*\,k-n})$$

Dies entspricht einem Arcustangens des tiefpassgefilterten d-Anteils der induzierten Spannung $Uind_{TPd^*k-n}$ und des tiefpassgefilterten q-Anteils der induzierten Spannung $Uind_{TPq^*k-n}$. Um die Berechnung zu vereinfachen, ist es auch möglich, diesen Arcustangens wie folgt zu vereinfachen:

$$\varepsilon = atan(Uind_{TP\,d^*\,k-n} / Uind_{TP\,q^*\,k-n})$$

$$\varepsilon = Uind_{TP\,d^*\,k-n} / Uind_{TP\,q^*\,k-n}$$

$$\varepsilon = asin(Uind_{TP\,d^*\,k-n}/(K\omega^*))$$

$$\varepsilon = Uind_{TP\,d^*\,k-n}/(K\omega^*)$$

Alternativ kann der Schätzfehler $\varepsilon$ auch über den Arcussinus basierend auf einer geschätzten Drehzahl und dem tiefpassgefilterten d-Anteil der induzierten Spannung $Uind_{TPd^*k-n}$ bestimmt werden. Auch hier ist eine Vereinfachung basierend auf der geschätzten Drehzahl unter der Annahme, dass der Schätzfehler $\varepsilon$ nur wenige Winkelgrade beträgt, möglich.

Mithilfe eines Rotorlagebeobachters kann in Schritt S10 die geschätzte Rotorlage zu jeder ersten Abtastzeitdauer Ts1 zu

$$\theta^*_{k-n} = \theta^*_{k-n-1} + \Delta\theta$$

ermittelt werden. Mit einer Begrenzung des Schätzfehlers $\varepsilon$lim = sat($\varepsilon$,$\varepsilon$max,$\varepsilon$min) auf vorgegebene $\varepsilon$max, $\varepsilon$min kann ein Aufschwingen des Verlaufs des Werts der geschätzten Läuferlage vermieden werden. Es ergibt sich zu jeder zweiten Abtastzeitdauer Ts2

$$\Delta\theta = (\omega^*_{k-n-1} + K1 \cdot \varepsilon lim) \cdot Ts1$$

$$\omega^*_{k-n} = \omega^*_{k-n-1} + K2 \cdot \varepsilon lim \cdot Ts2$$

wobei K1, K2 vorgegebenen Auslegungsgrößen und Ts1, Ts2 vorgegebenen Abtastzeitdauern für die Schätzung der Läuferlage bzw. der Drehzahl entsprechen. Die Abtastzeitdauern Ts1, Ts2 können gleich oder unterschiedlich sein.

In Schritt S11 kann durch eine Drehzahlextrapolation die aktuelle Position wie folgt bestimmt werden:

$$\theta^*_k = \theta^*_{k-n} + \omega^*_{k-n} \cdot n \cdot Ts.$$

Dies entspricht einer Laufzeitkompensation. Anschließend wird zu Schritt S1 zurückgesprungen, um einen nächsten Berechnungszyklus durchzuführen. Für den ersten Berechnungszyklus wird als geschätzter Wert der Läufer-

lage $\theta^*_{k-n}$ 0 angenommen.

Die obige Tiefpassfilterung ist als eine adaptive Filterung ausgebildet sein, die in Abhängigkeit von der geschätzten Drehzahl $\omega^*$ durchgeführt wird. Insbesondere kann eine Grenzfrequenz der Tiefpassfilterung auf zwischen 10% und 20% der sich durch die elektrische Leerlaufdrehzahl ergebende Drehfrequenz festgelegt werden. Damit wird die Bandbreite bei geringen Drehzahlen geringer gewählt als bei höheren Drehzahlen, um sicherzustellen, dass die Oberwellen zuverlässig herausgefiltert werden.

**Patentansprüche**

1. Verfahren zum Ermitteln einer Läuferlage einer rotatorischen, mehrphasigen, elektronisch kommutierten elektrischen Maschine (2), wobei die elektrische Maschine (2) mehrere Phasenleitungen (3) aufweist, die über Phasenanschlüsse bestrombar sind, umfassend die folgenden Schritte:

   - Bestimmen (S1, S2) von Phasenspannungen und Phasenströmen an Phasenanschlüssen der elektrischen Maschine (2);
   - Ermitteln (S6) der induzierten Spannungen an den Phasenanschlüssen der elektrischen Maschine (2) aus den bestimmten Phasenspannungen und Phasenströmen; und
   - Bereitstellen des durch die induzierten Spannungen bestimmten Spannungszeigers der induzierten Spannung bezüglich eines statorfesten kartesischen Koordinatensystems;
   **dadurch gekennzeichnet, dass**
   der Raumzeigerwinkel des bezüglich des statorfesten kartesischen Koordinatensystems bereitgestellten Spannungszeigers der induzierten Spannung rechnerisch um einen geschätzten Wert der Läuferlage rotiert wird (S7); dass der rotierte Spannungszeiger tiefpassgefiltert wird (S8), wobei durch das rechnerische Rotieren des Raumzeigerwinkels und die nachfolgende Tiefpassfilterung des rotierten Spannungszeigers der induzierten Spannung eine Bandpassfilterung im statorfesten Bereich realisiert wird; und dass basierend auf einer Winkellage des tiefpassgefilterten rotierten Spannungszeigers ($Uind_{TPdq^*}$) der induzierten Spannung der geschätzte Wert der Läuferlage für den darauffolgenden Berechnungszyklus bestimmt wird, wobei die Tiefpassfilterung als eine adaptive Filterung ausgebildet ist, die in Abhängigkeit von einer geschätzten Drehzahl ($\omega^*$) durchgeführt wird.

2. Verfahren nach Anspruch 1, wobei das Bereitstellen des durch die induzierten Spannungen bestimmten Spannungszeigers der induzierten Spannung bezüglich des statorfesten kartesischen Koordinatensystems durchgeführt wird, indem die ermittelten induzierten Spannungen in das statorfeste kartesische Koordinatensystem umgewandelt werden oder indem die bestimmten Phasenspannungen und Phasenströme an den Phasenanschlüssen der elektrischen Maschine (2) in das statorfeste kartesische Koordinatensystem umgewandelt werden, bevor aus diesen die induzierten Spannungen ermittelt werden.

3. Verfahren nach Anspruch 1 oder 2, wobei eine Filterfrequenz und/oder die Bandbreite der Tiefpassfilterung abhängig von der Drehzahl gewählt werden.

4. Verfahren nach einem der Ansprüche 1 bis 3, wobei basierend auf der Winkellage des tiefpassgefilterten rotierten Spannungszeigers ($Uind_{TPdq^*}$) der induzierten Spannung ein Schätzfehler ermittelt wird, wobei basierend auf dem Schätzfehler die Änderung des geschätzten Werts der Läuferlage zwischen zwei aufeinanderfolgenden Berechnungszyklen bestimmt wird.

5. Verfahren nach Anspruche 4, wobei der Schätzfehler abhängig von einem Imaginär- und einem Realteil des tiefpassgefilterten rotierten Spannungszeigers ($Uind_{TPdq^*}$) der induzierten Spannung oder abhängig von einem Imaginär- oder Realteil des tiefpassgefilterten rotierten Spannungszeigers der induzierten Spannung und einer Angabe über die Drehzahl ermittelt wird.

6. Vorrichtung zum Ermitteln einer Läuferlage einer rotatorischen, mehrphasigen, elektronisch kommutierten elektrischen Maschine (2), wobei die elektrische Maschine (2) mehrere Phasenleitungen (3) aufweist, die über Phasenanschlüsse bestrombar sind, umfassend:

   - eine Einrichtung zum Bestimmen von Phasenspannungen und Phasenströmen an Phasenanschlüssen der elektrischen Maschine (2);
   - eine Steuereinheit (6), die ausgebildet ist, um

• die induzierten Spannungen an den Phasenanschlüssen der elektrischen Maschine (2) zu ermitteln;

• den durch die induzierten Spannungen bestimmten Spannungszeiger der induzierten Spannung bezüglich eines statorfesten kartesischen Koordinatensystems bereitzustellen;

• den Raumzeigerwinkel des bezüglich des statorfesten kartesischen Koordinatensystems bereitgestellten Spannungszeigers der induzierten Spannung um einen geschätzten Wert der Läuferlage rechnerisch zu rotieren;

• den rotierten Spannungszeiger tiefpasszufiltern, wobei durch das rechnerische Rotieren des Raumzeigerwinkels und die nachfolgende Tiefpassfilterung des rotierten Spannungszeigers der induzierten Spannung eine Bandpassfilterung im statorfesten Bereich realisiert wird; und

• basierend auf einer Winkellage des tiefpassgefilterten rotierten Spannungszeigers ($Uind_{TPdq*}$) der induzierten Spannung der geschätzte Wert der Läuferlage für den darauffolgenden Berechnungszyklus zu bestimmen, wobei die Tiefpassfilterung als eine adaptive Filterung ausgebildet ist, die in Abhängigkeit von einer geschätzten Drehzahl ($\omega*$) durchgeführt wird.

7. Motorsystem (1) mit einer rotatorischen, mehrphasigen, elektronisch kommutierten elektrischen Maschine (2) und mit der Vorrichtung nach Anspruch 6.

8. Computerprogrammprodukt, das einen Programmcode enthält, der, wenn er auf einer Datenverarbeitungseinheit ausgeführt wird, in dem Verfahren nach einem der Ansprüche 1 bis 5, die folgenden Schritte durchführt:

- Empfangen von Angaben zu den Phasenspannungen und Phasenströmen an Phasenanschlüssen der elektrischen Maschine (2);

- Ermitteln der induzierten Spannungen an den Phasenanschlüssen der elektrischen Maschine (2) aus den empfangenen Phasenspannungen und Phasenströmen;

- Bereitstellen eines durch die induzierten Spannungen bestimmten Spannungszeigers der induzierten Spannung bezüglich eines statorfesten kartesischen Koordinatensystems; und

- rechnerisches Rotieren des Raumzeigerwinkels des bezüglich des statorfesten kartesischen Koordinatensystems bereitgestellten Spannungszeigers der induzierten Spannung um einen geschätzten Wert der Läuferlage;

- Tiefpassfiltern des rotierten Spannungszeigers, wobei durch das rechnerische Rotieren des Raumzeigerwinkels und die nachfolgende Tiefpassfilterung des rotierten Spannungszeigers der induzierten Spannung eine Bandpassfilterung im statorfesten Bereich realisiert wird; und

- basierend auf einer Winkellage des tiefpassgefilterten rotierten Spannungszeigers ($Uind_{TPdq*}$) der induzierten Spannung, Bestimmen des geschätzten Werts der Läuferlage für den darauffolgenden Berechnungszyklus, wobei die Tiefpassfilterung als eine adaptive Filterung ausgebildet ist, die in Abhängigkeit von einer geschätzten Drehzahl ($\omega*$) durchgeführt wird.

## Claims

1. Method for ascertaining a rotor position of a rotary, polyphase, electronically commutated electric machine (2), wherein the electric machine (2) has a plurality of phase lines (3), which are energizable via phase terminals, comprising the following steps:

- determining (S1, S2) phase voltages and phase currents at phase terminals of the electric machine (2);

- ascertaining (S6) the induced voltages at the phase terminals of the electric machine (2) from the determined phase voltages and phase currents; and

- providing the voltage vector of the induced voltage with respect to a stator-fixed Cartesian coordinate system, said voltage vector being determined by means of the induced voltages;

**characterized in that**

the space vector angle of the voltage vector of the induced voltage provided with respect to the stator-fixed Cartesian coordinate system is rotated (S7) computationally by an estimated value of the rotor position;

**in that** the rotated voltage vector is subjected to low-pass filtering (S8), wherein a bandpass filtering in the stator-fixed range is realized by the computational rotation of the space vector angle and the subsequent low-pass filtering of the rotated voltage vector of the induced voltage; and

**in that** on the basis of an angular position of the low-pass-filtered rotated voltage vector ($Uind_{TPdq*}$) of the induced voltage, the estimated value of the rotor position is determined for the subsequent calculation cycle, wherein the low-pass filtering is configured as an adaptive filtering that is carried out depending on an estimated rotational speed ($\omega*$).

2. Method according to Claim 1, wherein providing the voltage vector of the induced voltage with respect to the stator-fixed Cartesian coordinate system, said voltage vector being determined by means of the induced voltages, is carried out by the ascertained induced voltages being converted into the stator-fixed Cartesian coordinate system or by the determined phase voltages and phase currents at the phase terminals of the electric machine (2) being converted into the stator-fixed Cartesian coordinate system before the induced voltages are ascertained from them.

3. Method according to Claim 1 or 2, wherein a filter frequency and/or the bandwidth of the low-pass filtering are/is chosen depending on the rotational speed.

4. Method according to any of Claims 1 to 3, wherein an estimation error is ascertained on the basis of the angular position of the low-pass-filtered rotated voltage vector ($Uind_{TPdq*}$) of the induced voltage, wherein the change in the estimated value of the rotor position between two successive calculation cycles is determined on the basis of the estimation error.

5. Method according to Claim 4, wherein the estimation error is ascertained depending on an imaginary part and a real part of the low-pass-filtered rotated voltage vector ($Uind_{TPdq*}$) of the induced voltage or depending on an imaginary or real part of the low-pass-filtered rotated voltage vector of the induced voltage and an indication about the rotational speed.

6. Apparatus for ascertaining a rotor position of a rotary, polyphase, electronically commutated electric machine (2), wherein the electric machine (2) has a plurality of phase lines (3), which are energizable via phase terminals, comprising:

   - a device for determining phase voltages and phase currents at phase terminals of the electric machine (2);
   - a control unit (6) configured

     • to ascertain the induced voltages at the phase terminals of the electric machine (2);
     • to provide the voltage vector of the induced voltage with respect to a stator-fixed Cartesian coordinate system, said voltage vector being determined by means of the induced voltages;
     • to computationally rotate the space vector angle of the voltage vector of the induced voltage provided with respect to the stator-fixed Cartesian coordinate system by an estimated value of the rotor position;
     • to subject the rotated voltage vector to low-pass filtering, wherein a bandpass filtering in the stator-fixed range is realized by the computational rotation of the space vector angle and the subsequent low-pass filtering of the rotated voltage vector of the induced voltage; and
     • in that on the basis of an angular position of the low-pass-filtered rotated voltage vector ($Uind_{TPdq*}$) of the induced voltage, the estimated value of the rotor position is determined for the subsequent calculation cycle, wherein the low-pass filtering is configured as an adaptive filtering that is carried out depending on an estimated rotational speed ($\omega^*$).

7. Motor system (1) comprising a rotary, polyphase, electronically commutated electric machine (2) and comprising the apparatus according to Claim 6.

8. Computer program product containing a program code which, when it is executed on a data processing unit, in the method according to any of Claims 1 to 5, carries out the following steps:

   - receiving indications concerning the phase voltages and phase currents at phase terminals of the electric machine (2);
   - ascertaining the induced voltages at the phase terminals of the electric machine (2) from the received phase voltages and phase currents;
   - providing a voltage vector of the induced voltage with respect to a stator-fixed Cartesian coordinate system, said voltage vector being determined by means of the induced voltages; and
   - computationally rotating the space vector angle of the voltage vector of the induced voltage provided with respect to the stator-fixed Cartesian coordinate system by an estimated value of the rotor position;
   - subjecting the rotated voltage vector to low-pass filtering, wherein a bandpass filtering in the stator-fixed range is realized by the computational rotation of the space vector angle and the subsequent low-pass filtering of the rotated voltage vector of the induced voltage; and
   - on the basis of an angular position of the low-pass-filtered rotated voltage vector ($Uind_{TPdq*}$) of the induced voltage, determining the estimated value of the rotor position for the subsequent calculation cycle, wherein the low-pass filtering is configured as an adaptive filtering that is carried out depending on an estimated rotational speed ($\omega$*).

**Revendications**

1. Procédé de détermination d'une position de rotor d'une machine électrique (2) rotative, multiphasée à commutation électronique, la machine électrique (2) possédant plusieurs lignes de phase (3) qui peuvent être alimentées électriquement par le biais de bornes de phase, comprenant les étapes suivantes :

   - définition (S1, S2) de tensions de phase et de courants de phase au niveau de bornes de phase de la machine électrique (2) ;
   - détermination (S6) des tensions induites au niveau des bornes de phase de la machine électrique (2) à partir des tensions de phase et des courants de phase définis ; et
   - mise à disposition d'un vecteur de tension de la tension induite, défini par les tensions induites, en référence à un système de coordonnées cartésiennes fixe du stator ;

   **caractérisé en ce que**
   l'angle de vecteur d'espace du vecteur de tension de la tension induite mis à disposition en référence au système de coordonnées cartésiennes fixe du stator est mis en rotation par calcul autour d'une valeur estimée de la position du rotor (S7) ;
   le vecteur de tension mis en rotation est soumis à un filtrage passe-bas (S8), un filtrage passe-bande étant réalisé dans la zone fixe du stator par la rotation par calcul de l'angle de vecteur d'espace et le filtrage passe-bas qui suit du vecteur de tension en rotation de la tension induite ; et
   la valeur estimée de la position du rotor est définie pour le cycle de calcul qui suit en se basant sur une position angulaire du vecteur de tension en rotation filtré passe-bas ($Uind_{TPdq}$*) de la tension induite, le filtrage passe-bas étant réalisé sous la forme d'un filtrage adaptatif qui est effectué en fonction d'une vitesse de rotation estimée ($\omega$*).

2. Procédé selon la revendication 1, la mise à disposition du vecteur de tension de la tension induite défini par les tensions induites en référence au système de coordonnées cartésiennes fixe du stator étant effectuée en ce que les tensions induites déterminées sont converties dans le système de coordonnées cartésiennes fixe du stator ou en ce que les tensions de phase et les courants de phase déterminés au niveau des bornes de phase de la machine électrique (2) sont converties dans le système de coordonnées cartésiennes fixe du stator avant que les tensions induites soient déterminées à partir de ceux-ci.

3. Procédé selon la revendication 1 ou 2, une fréquence de filtrage et/ou la largeur de bande du filtrage passe-bande étant choisie en fonction de la vitesse de rotation.

4. Procédé selon l'une des revendications 1 à 3, une erreur d'estimation étant déterminée en se basant sur la position angulaire du vecteur de tension en rotation filtré passe-bas ($Uind_{TPdq}$*) de la tension induite, la modification de la valeur estimée de la position du rotor entre deux cycles de calcul successifs étant définie en se basant sur l'erreur d'estimation.

5. Procédé selon la revendication 4, l'erreur d'estimation étant déterminée en fonction d'une partie imaginaire et d'une partie réelle du vecteur de tension en rotation filtré passe-bas ($Uind_{TPdq}$*) de la tension induite ou en fonction d'une partie imaginaire ou d'une partie réelle du vecteur de tension en rotation filtré passe-bas de la tension induite et d'une indication relative à la vitesse de rotation.

6. Dispositif de détermination d'une position de rotor d'une machine électrique (2) rotative, multiphasée à commutation électronique, la machine électrique (2) possédant plusieurs lignes de phase (3) qui peuvent être alimentées électriquement par le biais de bornes de phase, comprenant :

   - un appareil servant à définir des tensions de phase et des courants de phase au niveau de bornes de phase de la machine électrique (2) ;
   - une unité de commande (6) qui est configurée pour

      * déterminer les tensions induites au niveau des bornes de phase de la machine électrique (2) ;
      * mettre à disposition le vecteur de tension de la tension induite, défini par les tensions induites, en référence à un système de coordonnées cartésiennes fixe du stator ;

\* mettre en rotation par calcul l'angle de vecteur d'espace du vecteur de tension de la tension induite mis à disposition en référence au système de coordonnées cartésiennes fixe du stator autour d'une valeur estimée de la position du rotor ;

\* soumettre le vecteur de tension mis en rotation à un filtrage passe-bas, un filtrage passe-bande étant réalisé dans la zone fixe du stator par la rotation par calcul de l'angle de vecteur d'espace et le filtrage passe-bas qui suit du vecteur de tension en rotation de la tension induite ; et

\* définir la valeur estimée de la position du rotor pour le cycle de calcul qui suit en se basant sur une position angulaire du vecteur de tension en rotation filtré passe-bas ($Uind_{TPdq*}$) de la tension induite, le filtrage passe-bas étant réalisé sous la forme d'un filtrage adaptatif qui est effectué en fonction d'une vitesse de rotation estimée ($\omega*$).

7. Système de moteur (1) comprenant une machine électrique (2) rotative, multiphasée à commutation électronique et comprenant le dispositif selon la revendication 6.

8. Produit de programme informatique qui contient un code de programme qui, lorsqu'il est exécuté sur une unité de traitement de données, dans le procédé selon l'une des revendications 1 à 5, exécute les étapes suivantes :

- réception d'indications à propos des tensions de phase et des courants de phase au niveau des bornes de phase de la machine électrique (2) ;

- détermination des tensions induites au niveau des bornes de phase de la machine électrique (2) à partir des tensions de phase et des courants de phase reçus ;

- mise à disposition d'un vecteur de tension de la tension induite, défini par les tensions induites, en référence à un système de coordonnées cartésiennes fixe du stator ; et

- mise en rotation par calcul, autour d'une valeur estimée de la position du rotor, de l'angle de vecteur d'espace du vecteur de tension de la tension induite mis à disposition en référence au système de coordonnées cartésiennes fixe du stator ;

- filtrage passe-bas du vecteur de tension mis en rotation, un filtrage passe-bande étant réalisé dans la zone fixe du stator par la rotation par calcul de l'angle de vecteur d'espace et le filtrage passe-bas qui suit du vecteur de tension en rotation de la tension induite ; et

- définition de la valeur estimée de la position du rotor pour le cycle de calcul qui suit en se basant sur une position angulaire du vecteur de tension en rotation filtré passe-bas ($Uind_{Tpdq*}$) de la tension induite, le filtrage passe-bas étant réalisé sous la forme d'un filtrage adaptatif qui est effectué en fonction d'une vitesse de rotation estimée ($\omega*$).

**FIG. 1**

Start

S1

S2

S3

S4

S5

S6

S7

S8

S9

S10

FIG. 2

S11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010038295 A1

- DE 102006042702 A1